Europäisches Patentamt

European Patent Office

Office européen des brevets

(11) Publication number : **0 439 255 B1**

# EUROPEAN PATENT SPECIFICATION

(45) Date of publication of patent specification :
**03.08.94 Bulletin 94/31**

(51) Int. Cl.⁵ : **G01C 13/00, B63C 11/32, G04B 47/06**

(21) Application number : **91300118.6**

(22) Date of filing : **08.01.91**

(54) **Electronic apparatus with depth meter.**

(30) Priority : **10.01.90 JP 3209/90**
        **13.09.90 JP 243375/90**

(43) Date of publication of application :
**31.07.91 Bulletin 91/31**

(45) Publication of the grant of the patent :
**03.08.94 Bulletin 94/31**

(84) Designated Contracting States :
**DE FR GB**

(56) References cited :
**EP-A- 0 195 636**
**WO-A-83/00670**
**US-A- 4 539 843**

(73) Proprietor : **SEIKO EPSON CORPORATION**
**4-1, Nishishinjuku 2-chome**
**Shinjuku-ku Tokyo (JP)**

(72) Inventor : **Ohta, Sayuri**
**c/o SEIKO EPSON CORPORATION,**
**3-5 Owa 3-chome**
**Suwa-shi, Nagano-ken (JP)**

(74) Representative : **Miller, Joseph et al**
**J. MILLER & CO.**
**34 Bedford Row,**
**Holborn**
**London WC1R 4JH (GB)**

## Description

This invention relates to electronic apparatus with a depth meter.

Normally when a diver submerges he carries with him a variety of safety appliances. One such appliance is a depth meter for measuring water depth. In recent years, in addition to the measurement of water depth, depth meters which perform other functions have been developed. Such functions include measuring maximum water depth, measuring diving time, providing an alarm at a given depth and providing an alarm when a predetermined diving time has elapsed.

International Patent No. WO 83/00670 shows a device for indicating diving parameters based on at least one memory containing the decompression parameters of a table of diving depth and times. It estimates and compares measured values of diving depth and times with those contained in the memory. At each moment of the diving, the total climbing time (including the imposed decompression stages depending on the duration and on the depth of the diving) may be displaced, and/or the real base time may be transformed to a time equivalent to a new depth. A single air/water interchangeable pressure sensor is used comprising, for example, a piezoresistive cell. LED diodes are lit, if the maximum climbing speed is exceeded, if a decompression stage is reached or if the device is out of work by exceeding the time and/or the depth.

In general, a diver predicts consumption of his air supply and controls de-pressurisation on the basis of physical conditions. In addition to the diver's own observations, criteria for knowing these physical conditions are ratios of mean water depth and diving time to consumption of the air supply.

Known electronic apparatus with a depth meter only provides maximum depth information. Mean depth information is provided from the diver's own experience and often this is inaccurate and leads to lack of safety.

The present invention seeks to provide electronic apparatus with a depth meter capable of providing important information as to the physical conditions of the diver thereby to make diving safer by calculating mean depth on the basis of values of diving time and total depth and displaying the mean depth.

According to the present invention, there is provided an electronic apparatus with a depth meter comprising: a pressure sensor for measuring at least a present water pressure; an A/D converting means for converting analog pressure data from said pressure sensor into digital pressure data; storage means for storing the pressure data from said A/D converting means; diving time measuring means for measuring diving time; characterised in that said apparatus further comprises mean depth calculating means for calculating means depth from the beginning of a given diving cycle; and display means for displaying the mean depth.

The apparatus may include first adder means for adding the pressure data of said storage means, so that, in operation, mean depth is calculated by dividing total depth data of said adder means by diving time measured by said diving time measuring means.

Preferably the apparatus includes timer means for forming a mean depth calculating sampling timing and second adder means for adding the pressure data of said storage means when a timing signal transmitted from said timer means is ON, so that, in operation, mean depth is calculated by dividing total depth data from said second adder means by the number of samplings.

Preferably, in operation, said depth calculating means multiplies the mean depth acquired last time by a value of (water pressure measuring number minus one) for every measurement of water pressure, add to pressure data from said A/D converting means to the multiplied result, divide the added result by the number of measurements of water pressure and sets this result as a mean depth.

The invention is illustrated, merely by way of example, in the accompanying drawings, in which:-

Figure 1 is a block diagram of an electronic apparatus according to the present invention with a depth meter;

Figure 2 is a circuit diagram of one embodiment of electronic apparatus according to the present invention with a depth meter; and

Figures 3 (a) to 3 (d) are flow charts showing operation of the electronic apparatus of Figure 2.

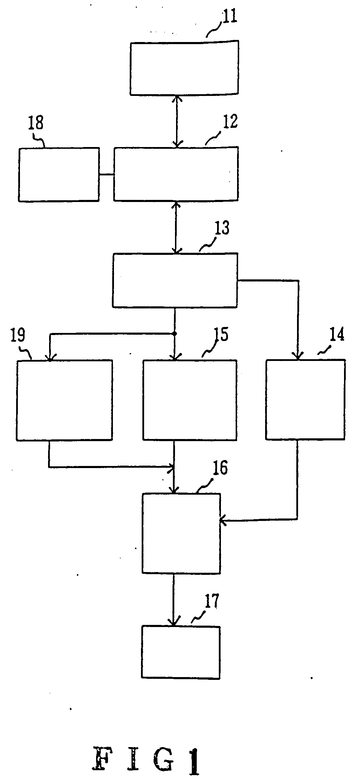

Referring first to Figure 1, there is shown an electronic apparatus according to the present invention with a depth meter. The electronic apparatus comprises a pressure sensor 11 for measuring present water pressure, an A/D converter 12 for converting analog pressure data from the pressure sensor 11 into digital pressure data, a memory 13 for storing the pressure data from the A/D converter 12, a diving time measuring circuit 14 for measuring diving time and producing diving time data, a mean depth calculating circuit 16 for calculating mean depth, and a display device 17 for displaying the mean depth.

The mean depth calculating circuit 16 receives a signal from a first adder 15 which adds the pressure data stored in the memory 13. A mean depth is calculated by dividing total depth data from the first adder 15 by diving time data from the diving time measuring circuit 14.

A timer 18 provides a mean depth calculating sample timing and a second adder 19 adds the pressure data stored in the memory 13 when a timing signal transmitted from the timer 18 is ON. A mean depth is calculated by dividing the total depth data from the second adder 19 by the number of sample timings.

The mean depth calculating circuit 16 multiplies the mean depth determined at the last sample timing by a value of (water pressure measuring number minus one) for every measurement of pressure. The mean depth calculating circuit 16 adds the pressure data from the A/D converter 12 to the multiplied result and divides the added result by the number of measurements of pressure. The mean depth calculating circuit 16 sets this result as a mean depth.

The accurate mean depth is automatically calculated on the basis of total depth data and the dividing time. The mean depth is then displayed. A ratio of the diving time and mean depth to the consumption of the air supply is an important criterion to determine the physical conditions of the diver. This makes it possible to predict air consumption. An adjustment can be made in accordance with the physical conditions in terms of controlling de-pressurisation. Hence, an electronic apparatus with the depth meter is safer than conventional apparatus.

Degrees of improvement and skilfulness of diving can be known from the mean depth value, the diving time and air consumption.

A method of detecting the mean depth involves the use of a sampling method, thereby reducing a soft movable time i.e. the software operation time for calculating the mean depth. This sampling in turn brings about a decrease in the electric current consumed.

The total depth is not permanently stored in the memory 13 but is obtained every time water pressure is measured on the basis of the mean depth and the diving time. In consequence, the storage capacity of the memory 13 can be reduced. This is highly advantageous from a commercial point of view.

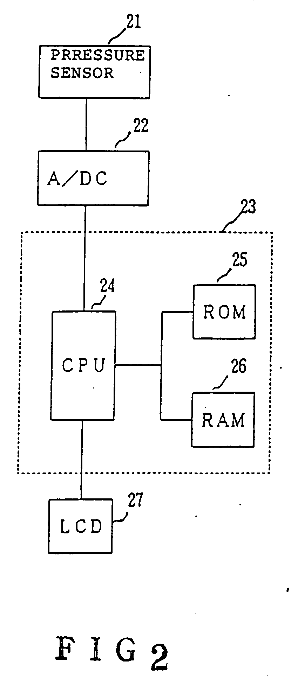

The apparatus shown in Figure 2 consists of a micro-computer 23 consisting of a CPU, a ROM 25 for storing software and a RAM 26 for storing data. The CPU 24 outputs a conversion start signal to an A/D converter 22 in synchronism with a 1 Hz signal. The A/D converter 22 causes a power supply to supply power to a pressure sensor 21. The pressure sensor 21 outputs analog pressure data as a voltage. The A/D converter 22 converts the analog pressure data into digital pressure data. The digital pressure data is stored in the RAM 26 via the CPU 24. On the basis of the digital pressure data inputted from the A/D converter 22, the CPU 24, if diving is taking place, computes the mean depth and measures diving time. The arithmetic results are outputted to an LCD 27 on which the results of the computation are displayed.

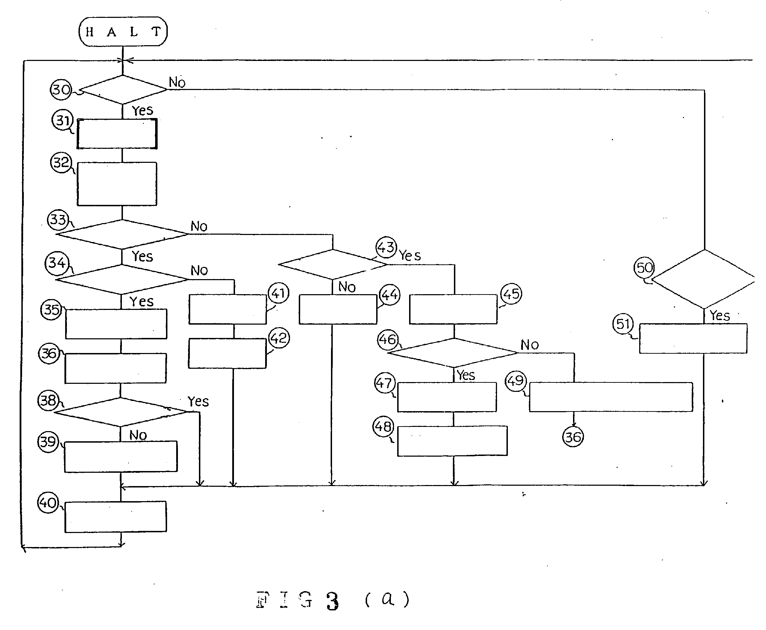

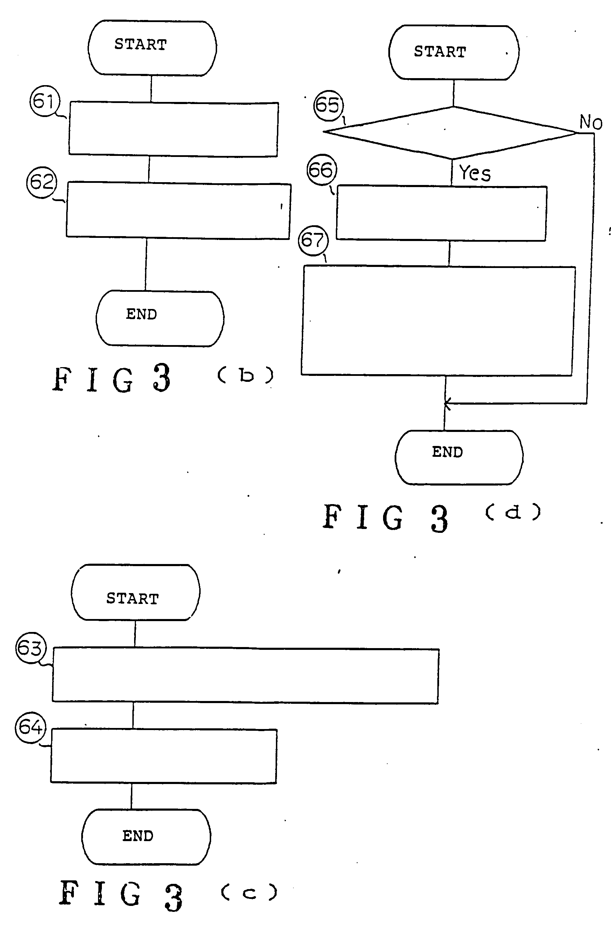

Figure 3 (a) is a flow chart showing how the electronic apparatus of Figure 2 is operated.

The operation starts with detecting whether the 1 Hz signal is a first transition signal or not. If it is the first transition signal (step 30), timer processing is effected (step 31), wherein time is counted up, and an alarm check is carried out. Next, an A/D conversion start signal is outputted to the A/D converter 22 (step 32).

A present diving flag is checked (step 33). If the diving flag is ON, whether a present depth is greater than 1.5 metres or not is checked (step 34). If the present water depth is greater than 1.5 metres, one second is added to the diving time (step 35). Subsequently, a mean depth is calculated (step 36). The present depth is compared with a maximum depth (step 38). If the present depth is greater than the maximum depth, the present depth is made equal to the maximum depth (step 38). The depth, the diving time, the maximum depth, the mean depth and the time are displayed (step 40). After this step, the operation returns to HALT.

When the diving flag is ON, and if the present depth is judged to be less than 1.5 metres at step 34, a rest time is re-set (step 41). The diving flag is turned OFF (step 42), and display is effected (step 40). Then the operation returns to HALT.

When the diving flag is OFF, whether or not the present depth is greater than 1.5 metres is checked (step 43). If not, one second is added to the rest time (step 44). Display is then performed (step 40) and the operation returns to HALT.

When the diving flag is OFF, and if the present depth is greater than 1.5 metres, the diving flag is turned ON (step 45). Whether the rest time exceeds ten minutes or not is examined (step 46). If the rest time is in excess of ten minutes, a total depth is equalised to the present depth (step 47). Then, the maximum depth is set equal to the present depth (step 48). Display is effected (step 40) and the operation returns to HALT.

When the diving flag is OFF, the rest time is added to the diving time (step 49) when the present depth is greater than 1.5 metres and the rest time is less than ten minutes. Steps 35 to 40 are then executed, and the operation returns to HALT.

If the 1 Hz first transition signal is not present, whether or not an A/D conversion end signal is at the first transition is checked (step 50). If not, the operation returns to HALT. If the end signal is at the first transition, the operation returns to HALT after inputting an A/D converted result.

Figure 3 (b) is a flow chart showing one way of calculating mean depth at step 36. In the case of diving, the present depth is added to the total depth obtained during the preceding sampling time. The added result is used as total depth (step 61). The total depth is divided by the diving time (step 62), the result being a mean depth

Figure 3 (c) is a flow chart showing another way of calculating mean depth at step 36. The mean depth obtained during the preceding sampling time is multiplied by the diving time minus one. The present depth is added to this result. The result is the total depth (step 63). The total depth is divided by the diving time (step 64). The result is the mean depth.

Figure 3 (d) is a flow chart showing a further way of calculating mean depth at step 36. Whether or not a mean depth sampling signal is ON is checked (step 65). If OFF, the operation moves to step 38. On the other hand, if the depth sampling signal is ON, the present depth is added to the total depth obtained during the preceding sampling time. The added value is the total depth (step 66). The submerge time is divided by the sampling time. The total depth is divided by the thus obtained value (step 67). The result is the mean water depth.

One of the flow charts of Figures 3 (b), 3 (c) or 3 (d) is selected by the software of the electronic apparatus.

## Claims

1. Electronic apparatus with a depth meter comprising: a pressure sensor (11) for measuring at least a present water pressure; an A/D converting means (12) for converting analog pressure data from said pressure sensor into digital pressure data; storage means (13) for storing the pressure data from said A/D converting means (12); diving time measuring means (14) for measuring diving time; characterised in that said apparatus further comprises mean depth calculating means (16) for calculating mean depth from the beginning of a given diving cycle; and display means (17) for displaying the mean depth.

2. Electronic apparatus as claimed in claim 1 characterised by including first adder means (15) for adding the pressure data of said storage means (13), so that, in operation, mean depth is calculated by dividing total depth data of said adder means (15) by diving time measured by said diving time measuring means (14).

3. Electronic apparatus as claimed in claim 1 or 2 characterised by including timer means (18) for forming a mean depth calculating sampling timing and second adder means (19) for adding the pressure data of said storage means (13) when a timing signal transmitted from said timer means is ON, so that, in operation, mean depth is calculated by dividing total depth data from said second adder means (19) by the number of samplings.

4. Electronic apparatus as claimed in any preceding claim characterised in that, in operation, said mean depth calculating means (16);

calculates the total depth according to the equation;

Total depth = {previous mean depth X (diving time - 1)} + pressure data,

wherein, the previous mean depth is that obtained during the preceding sampling time, the diving time is obtained from the diving time measuring means (14) and the pressure data is that from said A/D converting means (12); and

calculates the mean depth by dividing the resultant total depth by the diving time.

## Patentansprüche

1. Elektronische Vorrichtung mit einem Tiefenmesser, umfassend: einen Drucksensor (11) zum Messen zumindest eines momentanen Wasserdrucks; ein A/D-Wandlermittel (12) zum Umwandeln analoger Druckdaten des Drucksensors in digitale Druckdaten; Speichermittel (13) zum Speichern der Druckdaten des A/D-Wandlermittels (12); Tauchzeitmessungsmittel (14) zum Messen einer Tauchzeit;
   **dadurch gekennzeichnet,**
   daß die Vorrichtung ferner ein Durchschnittstiefenberechnungsmittel (16) zum Berechnen einer durchschnittlichen Tiefe vom Beginn eines gegebenen Tauchzyklus an sowie Sichtanzeigemittel (17) zur Sichtanzeige der durchschnittlichen Tiefe umfaßt.

2. Elektronische Vorrichtung nach Anspruch 1,
   **dadurch gekennzeichnet,**
   daß sie erste Addiermittel (15) zum Addieren der Druckdaten der Speichermittel (13) umfaßt, so daß im Betrieb die durchschnittliche Tiefe berechnet wird, indem Gesamttiefendaten der Addiermittel (15) durch die von den Tauchzeitmessungsmitteln (14) gemessene Tauchzeit dividiert werden.

3. Elektronische Vorrichtung nach Anspruch 1 oder 2,
   **dadurch gekennzeichnet,**
   daß sie Zeitgebermittel (18) zum Bilden eines Abfragetakts für die Durchschnittstiefenberechnung und zweite Addiermittel (19) zum Addieren der Druckdaten der Speichermittel (13), wenn ein von den Zeitgebermitteln übertragenes Taktsignal EIN ist, umfaßt, so daß im Betrieb die durchschnittliche Tiefe berechnet wird, indem Gesamttiefendaten der zweiten Addiermittel (19) durch die Anzahl der Abfragen dividiert werden.

4. Elektronische Vorrichtung nach einem der vorhergehenden Ansprüche,
   **dadurch gekennzeichnet,**
   daß das Durchschnittstiefenberechnungsmittel (16) im Betrieb die Gesamttiefe gemäß der Gleichung berechnet:

Gesamttiefe = {vorherige durchschnittliche

Tiefe x (Tauchzeit - 1)} + Druckdaten,

wobei die vorherige durchschnittliche Tiefe die während der vorhergehenden Abfragezeit erhaltene ist, die Tauchzeit von den Tauchzeitmessungsmitteln (14) erhalten wird und die Druckdaten diejenigen von dem A/D-Wandlermittel (12) sind, und

die durchschnittliche Tiefe durch Dividieren der resultierenden Gesamttiefe durch die Tauchzeit berechnet.

## Revendications

1. Appareil électronique avec indicateur de profondeur comprenant : un capteur de pression (11) destiné à mesurer au moins une pression d'eau actuelle ; un moyen convertisseur A/N (12) pour convertir des données analogiques de pression, délivrées par le capteur de pression, en données numériques de pression ; un moyen de mémoire (13) pour mettre en mémoire les données de pression du moyen convertisseur A/N (12) ; un moyen de mesure du temps de plongée (14) pour mesurer un temps de plongée, caractérisé en ce que ledit appareil comprend des moyens (16) de calcul de profondeur moyenne pour calculer une profondeur moyenne à partir du début d'un cycle de plongée donné ; et des moyens de visualisation (17) pour afficher la profondeur moyenne.

2. Appareil électronique selon la revendication 1, caractérisé en ce qu'il comprend un premier moyen additionneur (15) pour ajouter des données de pression dudit moyen de mémoire (13), de manière que, en fonctionnement, une profondeur moyenne soit calculée en divisant des données totales de profondeur dudit moyen additionneur (15) par un temps de plongée mesuré par ledit moyen de mesure du temps de plongée (14),

3. Appareil électronique selon la revendication 1 ou 2, caractérisé en ce qu'il comprend un moyen (18) de minuterie destiné à former un chronogramme d'échantillonnage pour le calcul de la profondeur moyenne et un second moyen additionneur (19) pour ajouter les données de pression dudit moyen de mémoire (13), lorsqu'un signal de chronogramme transmis depuis ledit moyen de minuterie est sur MARCHE, afin que, en fonctionnement, la profondeur moyenne soit calculée en divisant les données totales de profondeur venant dudit second moyen additionneur (19) par le nombre d'échantillonnages.

4. Appareil électronique selon l'une quelconque des revendications précédentes, caractérisé en ce que, en fonctionnement, ledit moyen (16) de calcul de profondeur moyenne ;

calcule la profondeur totale en appliquant l'équation ;

profondeur totale = [profondeur moyenne précédente X (temps de plongée - 1)] + données de pression

dans lequel la profondeur moyenne précédente est obtenue pendant la durée d'échantillonnage précédente, le temps de plongée est obtenu à partir du moyen de mesure des temps de plongée (14) et les données de pression sont celles qui proviennent dudit moyen convertisseur A/N (12) ; et

calcule la profondeur moyenne en divisant la profondeur totale résultante par le temps de plongée.

F I G 1

F I G 2

FIG 3 (a)

START

61

62

END

F I G 3 (b)

START

65 No

66 Yes

67

END

F I G 3 (d)

START

63

64

END

F I G 3 (c)